## Europäisches Patentamt

## European Patent Office

## Office européen des brevets

(19)

(11) Veröffentlichungsnummer: **0 150 243**
**B1**

(12) **EUROPÄISCHE PATENTSCHRIFT**

(45) Veröffentlichungstag der Patentschrift:
07.06.89

(21) Anmeldenummer: 84100907.9

(22) Anmeldetag: 28.01.84

(51) Int. Cl.⁴: **A 01 C 7/08**, A 01 C 7/04

(54) Sämaschine.

(43) Veröffentlichungstag der Anmeldung:
07.08.85 Patentblatt 85/32

(45) Bekanntmachung des Hinweises auf die Patenterteilung: 07.06.89 Patentblatt 89/23

(84) Benannte Vertragsstaaten:
AT BE CH DE FR GB IT LI LU NL SE

(56) Entgegenhaltungen:
EP–A– 0 037 775
DE–U– 7 820 979
GB–A– 937 519
US–A– 3 804 036

(73) Patentinhaber: Kirchberger, Franz
Lichtenfelser Strasse 43
D-8623 Staffelstein (DE)

(72) Erfinder: Kirchberger, Franz
Lichtenfelser Strasse 43
D-8623 Staffelstein (DE)

(74) Vertreter: LOUIS, PÖHLAU, LOHRENTZ & SEGETH
Kesslerplatz 1 Postfach 3055
D-8500 Nürnberg (DE)

EP 0 150 243 B1

## Beschreibung

Die Erfindung betrifft eine Sämaschine zum maschinellen Aussäen von Saatgut, mit einem Vorratsbehälter, einer Vielzahl Dosierräder in Form von Zellensarädern, auf deren Umfangsfläche quer zur Umfangsrichtung verlaufend voneinander beabstandete Kämmer oder Rippen ausgebildet sind, und einer Vielzahl den Dosierrädern zugeordneter Blasrohre, in denen das Saatgut mit Hilfe von Druckluft abtransportiert wird, wobei die Dosierräder an den Eintrittsstellen des Saatgutes in die Blasrohre angeordnet sind.

Derartige Sämaschinen sind allgemein bekannt. Die US-PS 4 399 757 zeigt eine Sämaschine mit einem Blasrohr, in dem das Saatgut mit Hilfe von Druckluft abtransportiert wird. Hier ist das Dosierrad als große Scheibe ausgebildet, an deren Umfang Löcher für das Vereinzeln und den Transport der Körner vorgesehen sind. Eine ähnliche Sämaschine zum Vereinzeln und Aussäen von Samenkörnern ist aus DE-U-7 820 979 bekannt. Dort werden die in Löchern am Umfang einer Säscheibe einzeln angeordneten Samenkörner mittels Druckluft von der entgegengesetzten Seite der Scheibe her aus den Löchern nach oben geblasen und müssen notgedrungen mittels einer Prallwand nach unten in das Blasrohr umgelenkt werden. Aus GB-A-937519 ist eine Sämaschine mit mehreren Blasrohren bekannt, bei der ähnlich wie bei der vorhergehenden Sämaschine ein vereinzeln der Samenkörner erfolgt, indem diese in Löchern eines sich drehenden Ringes abgelegt werden, aus welchen sie mittels eines am Umfang des Ringes angeordneten Zahnrads einzeln herausgedrückt werden, so daß sie nacheinander an ein Blasrohr abgegeben werden. Bei allen oben beschriebenen Sämaschinen handelt es sich also von Hause aus um Einzelkornsämaschinen, mit denen eine grössere Saatgutdichte nicht erzielbar ist.

Im allgemeinen aber sind die Sämaschinen für die Erzielung einer großen Saatgutdichte auf dem Feld ausgelegt. Die Dosierräder dosieren also große Saatgutströme, und der Durchmesser des Saatgutkanals vom Vorratsbehälter bis zur Austrittsstelle am Ende des Särohres, insbesondere also der Durchmesser der Blasrohre ist dementsprechend groß. Das wiederum bedingt einen verhältnismäßig niedrigen Luftdruck in den Blasrohren, der für den Abtransport des Saatgutes in den Blasrohren aufbaubar ist. Treten bei den bekannten Sämaschinen der in Rede stehenden Art keine Störungen auf, so kann bei großen Saatgutdichten auf dem Feld eine verhältnismäßig gleichmäßige Verteilung des Saatgutes auf dem Feld erzielt werden. Bei Störungen aber, die aufgrund des niedrigen Luftdruckes für den Transport des Saatgutes und der dadurch bedingten großen Gefahr von Verstopfungen hervorgerufen durch Fremdkörper wie Stroh leicht auftreten können ändert sich jedoch schlagartig die Verteilung des Saatgutes auf dem Feld. Solange die Verstopfung oder auch nur eine Einschnürung des Saatgutstromes vorhanden sind, wird die Saatgutdichte auf dem Feld drastisch abnehmen, bis sie nach meistens selbsttätiger Beseitigung der Verstopfung oder Störung wieder ihren alten Wert annimmt. Je geringer nun die von vornherein gewünschte Saatgutdichte auf dem Feld ist, desto kleiner ist der jeweilige Saatgutstrom in den Blasrohren und um so stärker machen sich Störungen auf die Verteilung des Saatgutes auf dem Feld bemerkbar. Aber selbst ohne Störungen lassen sich keine geringen Saatgutdichten auf dem Feld bei gleichmäßiger Verteilung des Saatgutes erzielen. Es gibt zwar spezielle Sämaschinen — sogenannte Einzelkornsämaschinen —, die für geringe Saatgutdichten bei äußerst gleichmäßiger Verteilung des Saatgutes auf dem Feld ausgelegt sind, wie dies bspw. bei Raps, Grassamen und Klee gewünscht wird, jedoch sind derartige Maschinen nicht für hohe Saatgutdichten geeignet, da bei diesen Sämaschinen jedes Korn des Saatgutes einzeln verarbeitet bzw. dosiert wird.

Der Erfindung liegt nun die Aufgabe zugrunde, eine Sämaschine zu schaffen, bei der eine gleichmäßige Verteilung des Saatgutes auf dem Feld über einen großen Bereich der Saatgutdichte hinweg mit hoher Betriebssicherheit gewährleistet ist.

Diese Aufgabe wird ausgehend von einer Sämaschine der eingangs genannten Art erfindungsgemäß dadurch gelöst, daß an der Eintrittsstelle des Saatgutes in das Blasrohr eine Umkehr der Fortbewegungsrichtung der Körner des Saatgutes erzwungen wird.

Aufgrund der an der Eintrittsstelle des Saatgutes in das Blasrohr stattfindenden aufgezwungenen Umkehr in der Fortbewegungsrichtung der Körner des Saatgutes formieren und orientieren sich die Körner neu, was nach dem Prinzip des geringsten Widerstandes derart erfolgt, daß sich das Korn glatt und problemlos in das Blasrohr einfädelt. Staus und damit auch ein Zermahlen der Körner an den Eintrittsstellen in die Blasrohre sowie zwangsläufig damit verbundene Unregelmäßigkeiten in der Verteilung werden durch die durch die Änderung der Förderrichtung der Körner geschaffene Entspannung einwandfrei verhindert.

Zweckmäßigerweise vergrößert sich jeweils der Raum zwischen der das Dosierrad in Umfangsrichtung teilweise umgebenden und den Saatgutförderkanal bildenden Wandung und dem Dosierrad stromabwärts vom Dosierrad an der Eintrittsstelle in das Blasrohr zur Bildung eines Pufferspeichers. Dieser Pufferspeicher erleichtert in erster Linie die Umkehr der Förderrichtung des Saatgutes und damit die Neuformierung und Umorientierung der Körner des Saatgutes für ein störungsfreies Einfädeln in das Blasrohr. Er unterstützt aber auch eine Trennung der Fremdkörper, wie z. B. Stroh, vom Saatgut. Das Stroh wird vom Dosierrad im Bereich des Pufferspeichers mitgenommen und weitergefördert, während das Saatgut dort einer Umkehr der Förderrichtung unterliegt und über das Blasrohr abtransportiert wird.

Vorteilhafterweise ist jeweils die das Dosierrad in Umfangsrichtung teilweise umgebende und den Saatgutförderkanal begrenzende Wandung federnd gegen das Dosierrad vorgespannt Dadurch können Fremdkörper durch die Dosiermechanik hindurch transportiert werden, ohne Verstopfungen zu verursachen.

Bei letzterer Ausführung ist zweckmäßigerweise jeweils die das Dosierrad in Umfangsrichtung teilweise umgebende und den Saatgutförderkanal begrenzende Wandung an einem Schwenkteil ausgebildet, das stromaufwärts von dem Dosierrad verschwenkbar angelenkt ist und unter einer Federspannung steht.

Das Blasrohr ist vorzugsweise starr mit dem Schwenkteil verbunden.

Die Dosierräder sind vorteilhafterweise sogenannte Zellensäräder, also Räder, auf deren Umfangsfläche quer zur Umfangsrichtung verlaufend voneinander beabstandete Kämme oder Rippen ausgebildet sind.

Die Längsverteilung des Saatgutes kann aber verbessert, d. h. vergleichmäßigt werden, wenn gemäß einer weiteren Ausgestaltung der Erfindung die Kämme sich jeweils nur über die halbe Breite der Zellensäräder erstrecken und abwechselnd auf beiden Seiten des Särades nach Art der sogenannten Nockensäräder angeordnet sind.

Eine weitere Verbesserung wird erzielt, wenn die Kämme der Zellensäräder nicht senkrecht zur Umfangsrichtung des Särades verlaufen, sondern vielmehr sich über die Breite des Särades V-förmig erstrecken, um die Körner des Saatgutes zur Mitte hin zu konzentrieren.

Einem ähnlichen Ziel dient die weitere Ausbildung der Erfindung, nämlich Umfangsfläche des Dosierrades und gegenüberliegende Wandung im Querschnitt V-förmig auszubilden.

Der Pufferspeicher an der Eintrittsstelle des Saatgutes in das Blasrohr bietet eine gute Möglichkeit der Beimischung von Komponenten wie Beize, Mikrogranulate usw., weshalb in weiterer Ausbildung der Erfindung ein Anschluß am Pufferspeicher für eine Beimischung derartiger Stoffe vorgesehen ist. Bei einer Beimischung von Komponenten zum Saatgut an dieser Stelle entfällt das Problem der Entmischung eines im Vorratsbehälter der Sämaschine bereits mit den Zusatzkomponenten vermischten Saatgutes.

Der Strömungsdurchmesser der Blasrohre kann zur völligen Vereinzelung der Körner des Saatgutes bis auf in etwa den Kornabmessungen des Saatgutes entsprechende Werte abnehmen. Auf diese Weise kann mit hoher Betriebssicherheit und hoher Konstanz Korn für Korn in schneller Folge nacheinander abgesetzt werden, ähnlich wie es bei den Einzelkornsämaschinen der Fall ist. Arbeitsfrequenzen bis zu 150 Körnern/sec. bei Maschinen von 17 bis zu über 100 Reihen sind prizipiell möglich.

Schließlich ist es nach der Erfindung auch möglich, den gesamten Dosierapparat auch im Vorratsbehälter selbst unterzubringen, wodurch das herkömmliche Rührwerk im Vorratsbehälter entfällt und eine noch größere Betriebssicherheit dadurch gegeben ist, daß mechanische Beanspruchungen der Wandungen des Vorratsbehälters keine Störungen im Durchfluß des Saatgutes durch die Dosiermechanismen haben, wie dies beim Stand der Technik der Fall ist, wo im Vorratsbehälter Durchbrüche vorgesehen sind, durch die das Saatgut in die Dosiermechanismen abfließen kann, deren Querschnitt und Umrißform sich bei Beanspruchungen des Vorratsbehälters ändern. Insbesondere werden durch die Integration der Dosiervorrichtung in dem Vorratsbehälter Unterschiede zwischen den Dosiereinheiten aufgrund unterschiedlicher Geometrie der Durchbrüche in der Wandung des Vorratsbehälters, durch die das Saatgut beim Stand der Technik zu den Dosiereinrichtungen fließt, ausgeschaltet.

Ein weiterer allgemeiner Vorteil der Erfindung ist auch darin zu sehen, daß aufgrund des geringen Durchmessers der Blasrohre und den raumsparenden Dosiervorrichtungen viele Reihen von Blasrohren dicht nebeneinander angeordnet werden können, wodurch auch eine Vergleichmäßigung der Verteilung des Saatgutes quer zur Längs- bzw. Fahrtrichtung erzielt werden kann.

Weitere Vorteile, Einzelheiten und Merkmale der Erfindung ergeben sich aus der nachstehenden, anhand der beiliegenden Zeichnung erfolgenden Beschreibung eines bevorzugten Ausführungsbeispiels. In der Zeichnung stellen dar :

Fig. 1 Schematisch einen Schnitt durch den erfindungswesentlichen Teil einer Sämaschine

Fig. 2 eine spezielle Ausführungsform des Särades, teilweise im Schnitt.

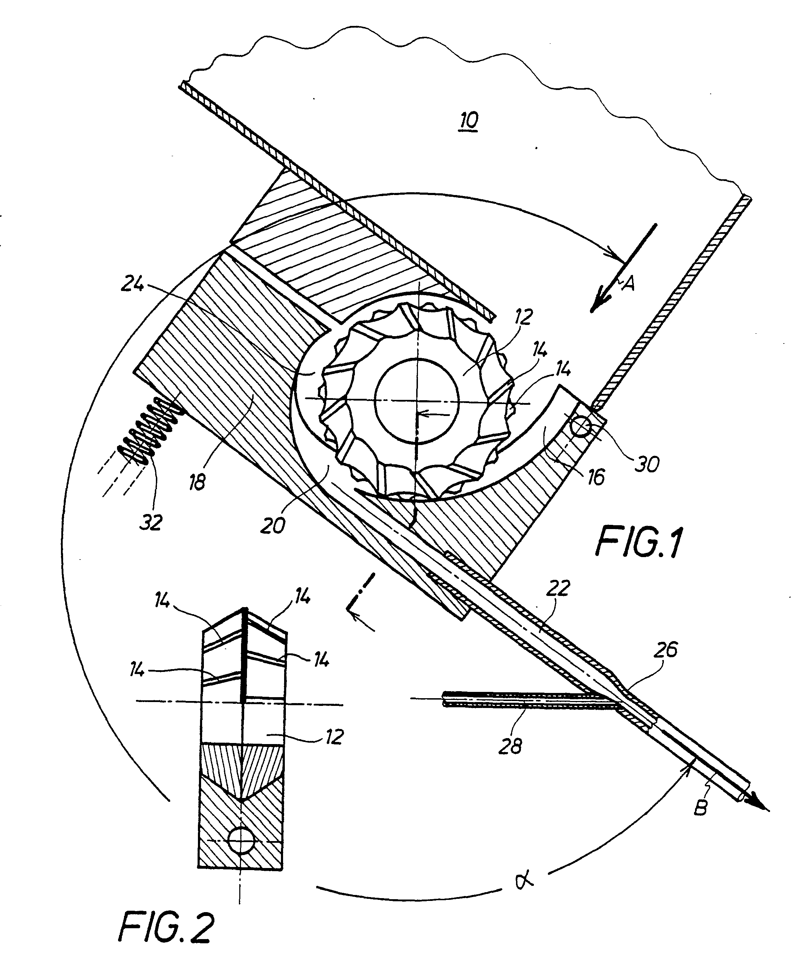

Im Vorratsbehälter 10 befindet sich das nicht dargestellte Saatgut, das in Richtung des Pfeiles A dem Dosierrad 12 zuströmt. Die Umfangsfläche des Dosierrades 12 ist, wie es insbesondere auch aus Fig. 2 hervorgeht, im Querschnitt V-förmig gestaltet und weist abwechselnd auf den beiden Seiten des Dosierrades aus sich zur Mitte der Umfangsfläche hin — jeweils über die halbe Breite — erstreckende Kämme 14 auf, die V-förmig zueinander angeordnet sind, um das Saatgut zur Mitte hin zu konzentrieren. Entsprechend dem V-förmigen Querschnitt der Umfangsfläche des Särades 12 ist die dieser Umfangsfläche gegenüberliegende Wandung 16 eines massiven Schwenkteiles 18 gestaltet, wie dies aus Fig. 1 hervorgeht. Diese Umfangsfläche 16 umgibt das Särad 12, wie in Fig. 1 dargestellt, teilweise, wobei das Särad 12 wie gezeigt nahe der Eintrittsstelle 20 in ein Blasrohr 22 angeordnet ist. Im Bereich der Eintrittsstelle 20 vergrößert sich wie gezeigt der Raum zwischen der Wandung 16 und der Umfangsfläche des Särades 12 zur Bildung eines Pufferspeichers 24. Von der Eintrittsstelle 20, die zum Pufferspeicher 24 hin offen ist, geht wie bereits erwähnt das Blasrohr 22 aus, das einen relativ kleinen Durchmesser aufweist und sich bei 26 noch weiter verjüngt, wobei der Durchmesser dann Werte in der Größenordnung der Kornabmessungen des Saatgutes annehmen kann. An der Verjüngungsstelle 26 mündet auch eine Zufuhrleitung 28 für Druckluft. Diese Stelle ist nach den bisherigen Erkenntnissen der geeignetste Ort für die Zufuhr der Druckluft.

Das Schwenkteil 18 ist ferner um eine Achse 30 schwenkbar, die stromaufwärts vom Dosierrad 12 liegt, wie gezeigt, wobei es über eine Feder 32 gegen das Särad 12 gedrückt wird. Es versteht sich, daß in einer Sämaschine mehrere der in Fig. 1 gezeigten Einheiten nebeneinander angeordnet sind.

Anstelle der in Fig. 1 gezeigten Anordnung der Dosiereinheit am Vorratsbehälter 10 können auch die Dosiereinheiten im Vorratsbehälter 10 selbst untergebracht sein.

Wie ohne weiteres zu erkennen, strömt das Saatgut im Vorratsbehälter 10 in Richtung des Pfeiles A dem Dosierrad 12 zu, wobei es im Bereich der Eintrittsstelle 20 und des Pufferspeichers 24 eine Bewegungsumkehr vollzieht und von dort aus dann in Richtung des Pfeiles B weitergefördert wird. Der Winkel α zwischen der Förderrichtung A stromaufwärts vom Dosierrad 12 und der Förderrichtung B stromabwärts vom Dosierrad 12 ist dabei wie ohne weiteres ersichtlich größer als 180°, um die erfindungsgemäße Bewegungsumkehr der Saatgutkörner zu erzielen.

**Patentansprüche**

1. Sämaschine zum maschinellen Aussäen von Saatgut, mit einem Vorratsbehälter (10), einer Vielzahl Dosierräder (12) in Form von Zellensärädern, auf deren Umfangsfläche quer zur Umfangsrichtung verlaufend voneinander beabstandete Kämme (14) oder Rippen ausgebildet sind, und einer Vielzahl den Dosierrädern zugeordneter Blasrohre (22), in denen das Saatgut mit Hilfe von Druckluft abtransportiert wird, wobei die Dosierräder (12) an den Eintrittsstellen (20) des Saatgutes in die Blasrohre (22) angeordnet sind, dadurch gekennzeichnet, daß an der Eintrittsstelle des Saatgutes in das Blasrohr eine Umkehr der Fortbewegungsrichtung der Körner des Saatgutes erzwungen wird.

2. Sämaschine nach Anspruch 1, dadurch gekennzeichnet, daß sich jeweils der Raum zwischen der das Dosierrad (12) in Umfangsrichtung teilweise umgebenden und den Saatgutförderkanal bildenden Wandung (16) und dem Dosierrad (12) stromabwärts vom Dosierrad an der Eintrittsstelle (20) in das Blasrohr (22) zur Bildung eines Pufferspeichers (24) vergrößert.

3. Sämaschine nach Anspruch 1 oder 2, dadurch gekennzeichnet, daß jeweils die das Dosierrad (12) in Umfangsrichtung teilweise umgebende und den Saatgutförderkanal begrenzende Wandung (16) federnd gegen das Dosierrad vorgespannt ist.

4. Sämaschine nach Anspruch 3, dadurch gekennzeichnet, daß jeweils die das Dosierrad (12) in Umfangsrichtung teilweise umgebende und den Saatgutförderkanal begrenzende Wandung (16) an einem Schwenkteil (18) ausgebildet ist, das stromaufwärts von dem Dosierrad (12) verschwenkbar (bei 30) angelenkt ist und unter einer Federspannung (32) steht.

5. Sämaschine nach Anspruch 4, dadurch gekennzeichnet, daß das Blasrohr (22) starr mit dem Schwenkteil (18) verbunden ist.

6. Sämaschine nach einem der vorhergehenden Ansprüche, dadurch gekennzeichnet, daß die Kämme (14) sich jeweils nur über die halbe Breite Zellensäräder (12) erstrecken und abwechselnd auf beiden Seiten des Särades nach Art der sogenannten Nockensäräder angeordnet sind.

7. Sämaschine nach einem der vorhergehenden Ansprüche, dadurch gekennzeichnet, daß die Kämme (14) der Zellensäräder (12) sich über die Breite des Särades V-förmig erstrecken.

8. Sämaschine nach einem der vorhergehenden Ansprüche, dadurch gekennzeichnet, daß die Umfangsflächen des Dosierrades (12) und der gegenüberliegenden Wandung (16) jeweils im Querschnitt V-förmig ausgebildet sind.

9. Sämaschine nach einem der Ansprüche 2 bis 8, dadurch gekennzeichnet, daß der Pufferspeicher (24) einen Anschluß für eine Beimischung von Komponenten aufweist.

10. Sämaschine nach einem der vorhergehenden Ansprüche, dadurch gekennzeichnet, daß der Strömungsdurchmesser der Blasrohre zur völligen Vereinzelung der Körner bis auf in etwa den Kornabmessungen des Saatgutes entsprechende Werte abnimmt.

11. Sämaschine nach einem der vorhergehenden Ansprüche, dadurch gekennzeichnet, daß die Dosiereinheiten im Vorratsbehälter (10) selbst untergebracht sind.

**Claims**

1. A sowing machine for the mechanical sowing of seed stock with a feed hopper (10), a plurality of dosing wheels (12) in the form of cellular sowing wheels, on the peripheral surface whereof there are formed interspaced combs (14) or ribs extending transversely to the peripheral direction, and a plurality of blast pipes (22) assigned to the dosing wheels, wherein the seed stock is discharged by means of pressurised air, the dosing wheels (12) being arranged at the entry points (20) of the seed stock into the blast pipes (22), characterized that the grains of the seed stock are compelled to reverse their direction of travel at the entry point of the seed stock into the blast pipe.

2. A sowing machine according to claim 1, characterized in that the space between the wall (16) partly surrounding the dosing wheel (12) in the peripheral direction and forming the feed duct for the seed stock, and the dosing wheel (12) is in each case enlarged down-line from the dosing wheel at the inlet point (20) into the blast pipe (22) in order to form a buffer store (24).

3. A sowing machine according to claim 1 or 2, characterized in that the wall (16) partly surrounding the dosing wheel (12) in the peripheral direction and delimiting the feed duct for the seed stock is in each case elastically prestressed against the dosing wheel.

4. A sowing machine according to claim 3, characterized in that the wall (16) partly surrounding the dosing wheel (12) in the peripheral direction and delimiting the feed duct for the seed stock is formed in each case on a tilting member (18) which is articulated (at 30) up-line from the dosing wheel (12) for tilting, and that it is subjected to a spring loading (32).

5. A sowing machine according to claim 4, characterized in that the blast pipe (22) is rigidly connected to the tilting member (18).

6. A sowing machine according to one of the preceding claims, characterized in that the comb (14) extends in each case over only half the width of the cellular sowing wheels (l2), and that they are alternately arranged on both sides of the sowing wheel in the manner of the so-called cam sowing wheels.

7. A sowing machine according to one of the preceding claims, characterized in that the combs (14) of the cellular sowing wheels (12) extend over the width of the sowing wheel in a V configuration.

8. A sowing machine according to one of the preceding claims, characterized in that the peripheral surfaces of the dosing wheel (12) and of the facing wall (16) respectively have a V configuration in cross section.

9. A sowing machine according to one of claims 2 to 8, characterized in that the buffer store (24) has a connector for the admixing of constituents.

10. A sowing machine according to one of the preceding claims, characterized in that the flow diameter of the blast pipes tapers down to values approximately corresponding to the grain dimensions of the seed stock for the complete separation of the grains.

11. A sowing machine according to one of the preceding claims, characterized in that the dosing units are accommodated in the feed hopper (10) itself.

## Revendications

1. Semoir pour l'ensemencement mécanique à l'aide de semences, comportant un récipient de stockage (10), de multiples roues de dosage (12) se présentant sous la forme de roues de semoir à alvéoles, sur la surface périphérique desquelles sont réalisées des crêtes (14) ou nervures s'étendant transversalement à la direction circonférentielle et espacées entre elles, et de multiples tubes de soufflage (22) associés à ces roues de dosage et dans lesquels les semences sont évacuées en étant transportées par de l'air comprimé, les roues de dosage (12) étant disposées aux emplacements d'entrée (20) des semences dans les tubes de soufflage (22), caractérisé en ce qu'il est imposé aux grains de semence une inversion de leur sens de déplacement à l'endroit de l'emplacement d'entrée des semences dans le tube de soufflage.

2. Semoir suivant la revendication 1, caractérisé en ce que, pour chaque roue de dosage (12), l'espace la séparant de la paroi (16) qui l'entoure partiellement suivant la direction circonférentielle et qui forme un conduit d'acheminement des semences s'accroît à l'endroit de l'emplacement d'entrée (20) dans le tube de soufflage (22) et vers l'aval par rapport à la roue de dosage, de façon à former un accumulateur-tampon (24).

3. Semoir suivant l'une des revendications 1 ou 2, caractérisé en ce que, pour chaque roue de dosage (12), la paroi (16) qui l'entoure partiellement suivant la direction circonférentielle et qui délimite un conduit d'acheminement des semences est appliquée sous une précontrainte élastique sur cette roue de dosage.

4. Semoir suivant la revendication 3, caractérisé en ce que, pour chaque roue de dosage, la paroi (16) qui l'entoure partiellement suivant la direction circonférentielle et qui délimite un conduit d'acheminement des semences est réalisée sur une partie basculante (18) qui est articulée de manière pivotante (en 30) vers l'amont par rapport à la roue de dosage (12) et qui se trouve sous une contrainte élastique (32).

5. Semoir suivant la revendication 4, caractérisé en ce que le tube de soufflage (22) est fixé à demeure sur la partie basculante (18).

6. Semoir suivant l'une des revendications précédentes, caractérisé en ce que les crêtes (14) ne s'étendent chacune que sur la moitié de la largeur des roues de semoir à alvéoles (12) et sont disposées de manière alternée sur les deux côtés de la roue, à la façon des roues de semoir dites à cames.

7. Semoir suivant l'une des revendications précédentes, caractérisé en ce que les crêtes (14) des roues de semoir à alvéoles (12) s'étendent en forme de V sur la largeur de la roue.

8. Semoir suivant l'une des revendications précédentes, caractérisé en ce que les surfaces périphériques de la roue de dosage (12) et la paroi (16) qui leur fait face sont réalisées chacune en forme de V en section transversale.

9. Semoir suivant l'une des revendications 2 à 8, caractérisé en ce que l'accumulateur-tampon (24) comporte un raccordement pour le mélange de composants.

10. Semoir suivant l'une des revendications précédentes, caractérisé en ce que, afin d'individualiser totalement les grains, le diamètre d'écoulement des tubes de soufflage se réduit jusqu'à des valeurs correspondant à peu près aux dimensions des grains de semence.

11. Semoir suivant l'une des revendications précédentes, caractérisé en ce que les unités de dosage sont montées dans le réservoir de stockage (10) lui-même.

FIG.1

FIG.2